# FASCICULE DE BREVET EUROPEEN

(11) **EP 1 690 709 B1**
(45) Date de publication et mention de la délivrance du brevet: **02.04.2008**
(21) Numéro de dépôt: 06290253.1
(22) Date de dépôt: 14.02.2006
(51) Int. Cl.: B60H 1/34

(54) **Aérateur à ailettes pivotantes et à ailettes rotatives pour véhicules, notamment pour automobile**
Luftaustritt für Fahrzeuge mit schwenkenden Schaufeln und rotierenden Schaufeln, insbesondere für Automobile
Air vent for vehicles with pivoting vanes and rotating vanes, especially for an automobile

(30) Priorité: 14.02.2005 FR 0501462
(43) Date de publication de la demande: 16.08.2006
(73) Titulaire: Key Plastics International, 61130 Belleme (FR)
(72) Inventeur: Avanzini, Philippe, 61130 Belleme (FR); Pinton, David, 61400 Mauves sur Huisne (FR); Bourreau, Guy, 17450 Fouras (FR); Davril, Jean-Louis, 61400 Mortagne au Perche (FR)
(74) Mandataire: Lemoine, Robert

(56) Documents cités:
- EP-A- 0 719 665
- EP-A- 0 879 718
- EP-A- 1 344 668
- DE-A1- 3 044 289
- US-A- 4 339 991

## Description

La présente invention concerne un aérateur destiné à introduire un flux d'air dans l'habitacle d'un véhicule, notamment d'une automobile, comprenant un réceptacle comportant une première paroi transversale pourvue d'un orifice relié à une source d'air conditionné, une seconde paroi transversale située en face de la première paroi transversale, et une paroi périphérique reliant les première et seconde parois transversales et dans laquelle est ménagée une ouverture d'aération débouchant dans l'habitacle du véhicule, et des moyens de réglage situés dans le réceptacle pour modifier la direction du flux d'air sortant de l'ouverture d'aération.

Un tel aérateur est connu du document EP-A-1 344 668.

La plupart des aérateurs installés actuellement dans les véhicules automobiles comportent de nombreuses pièces constitutives qui les rendent coûteux à fabriquer.

Par ailleurs, les moyens de réglage de ces aérateurs permettent difficilement de diriger dans une direction prédéterminée précise le flux d'air pénétrant dans l'habitacle des véhicules.

La présente invention se propose de remédier à ces inconvénients et, pour ce faire, elle a pour objet un aérateur ayant la structure présentée au premier paragraphe ci-dessus et qui est caractérisé en ce que les moyens de réglage comprennent plusieurs ailettes uniformément réparties entre les parois transversales du réceptacle et formant à l'intérieur de celui-ci des saillies transversales augmentant avec la distance les séparant de l'orifice de la première paroi transversale, les ailettes étant montées pivotantes sur des axes s'étendant parallèlement aux parois transversales et prenant appui sur la paroi périphérique du réceptacle.

Cet aérateur comporte un nombre limité de pièces constitutives et peut donc être fabriqué avec un prix de revient compétitif.

Par ailleurs, la configuration particulière de ses ailettes, qui font d'autant plus saillie dans le réceptacle qu'elles sont plus éloignées de l'orifice relié à la source d'air conditionné, permet de répartir uniformément le flux d'air sur toute l'étendue de l'ouverture d'aération et évite par conséquent que le passager situé devant celle-ci soit gêné par l'air admis dans l'habitacle du véhicule.

De préférence, les ailettes comportent un bord extérieur de niveau avec l'ouverture d'aération de la paroi périphérique du réceptacle.

Comme les ailettes ne font pas saillie extérieurement, les risques pour qu'elles soient endommagées accidentellement au cours du temps sont limités.

Par ailleurs, les ailettes peuvent avantageusement être reliées entre elles par une tige de liaison s'étendant perpendiculairement à leurs axes de pivotement respectifs, la tige de liaison étant elle-même reliée à un organe de commande manuel faisant saillie dans l'habitacle, à proximité de l'ouverture d'aération.

Il suffit ainsi d'actionner l'organe de commande pour faire pivoter simultanément toutes les ailettes et modifier la direction du flux d'air entrant dans l'habitacle du véhicule.

Lorsque le réceptacle est installé horizontalement, le flux d'air peut être émis dans une direction horizontale prédéterminée située entre deux directions extrêmes dirigées respectivement vers la droite et vers la gauche, sa direction d'émission dépendant du réglage de l'organe de commande.

De préférence, l'organe de commande manuel est un curseur coulissant.

Il convient donc de déplacer le curseur sur une distance prédéterminée dans un sens donné pour diriger le flux d'air dans la direction voulue.

Selon un mode de réalisation particulier de l'invention, le réceptacle est situé à l'intérieur d'un corps cylindrique dont la paroi latérale est définie par des ailettes s'étendant parallèlement à son axe longitudinal, le corps cylindrique étant monté rotatif axialement dans un boîtier comportant une ouverture latérale faisant face à l'ouverture d'aération du réceptacle.

Les ailettes du corps cylindrique permettent de diriger le flux d'air dans une direction prédéterminée perpendiculaire à celle qui est définie par les ailettes situées dans le réceptacle.

Si les ailettes du réceptacle sont prévues pour diriger le flux d'air vers la droite ou vers la gauche, les ailettes du corps cylindrique sont prévues quant à elles pour diriger le flux d'air vers le haut ou vers le bas.

De préférence, les ailettes du corps cylindrique sont disposées symétriquement par rapport à un plan diamétral prédéterminé de ce dernier et présentent par rapport à ce plan des inclinaisons variant progressivement.

Il convient ainsi de faire trouver le corps cylindrique dans un sens pour diriger le flux d'air dans une direction donnée, par exemple vers le haut, et dans l'autre sens pour diriger le flux d'air dans la direction opposée, par exemple vers le bas.

De manière avantageuse, le corps cylindrique peut comporter deux ailettes extrêmes dont les plans médians longitudinaux forment des angles de respectivement 0° et 90° avec le plan diamétral prédéterminé.

Grâce à cette structure particulière, le flux d'air admis dans l'habitacle du véhicule peut être important lorsque l'ailette extrême parallèle au plan diamétral prédéterminé est devant l'ouverture latérale du boîtier et réduit lorsque l'autre ailette extrême est devant cette ouverture.

Selon un mode de réalisation particulier du corps cylindrique, les côtés longitudinaux des ailettes délimitent des cercles interne et externe pratiquement tangents au niveau de l'ailette extrême dont le plan médian longitudinal forme un angle de 90° avec le plan diamétral prédéterminé.

L'émission du flux d'air dans l'habitacle du véhicule peut dans ce cas être complètement interrompue lorsque l'ailette extrême formant un angle de 90° avec le plan diamétral prédéterminé et les ailettes adjacentes à cette ailette extrême sont devant l'ouverture latérale du boîtier.

Pour que le flux d'air sortant de l'aérateur puisse être orienté avec précision dans une direction prédéterminée dans le sens horizontal et/ou dans le sens vertical, il est souhaitable que la paroi périphérique du réceptacle soit tangente au cercle délimité par les côtés longitudinaux internes des ailettes du corps cylindrique, au niveau de sa partie qui est située dans le plan diamétral prédéterminé, du côté de l'ouverture latérale du boîtier.

Selon le mode de réalisation ci-dessus, les plans médians longitudinaux des ailettes situées de part et d'autre du plan diamétral prédéterminé peuvent former avec ce dernier des angles α différents, la valeur d'un angle α pour une ailette prédéterminée étant égale à la moitié de celle de l'angle β formé, pour cette aile prédéterminée, par deux rayons prédéterminés du cercle externe, à savoir le rayon situé dans le plan médian longitudinal de l'ailette extrême qui forme un angle nul avec le plan diamétral prédéterminé et le rayon coupant l'axe longitudinal de l'ailette correspondante.

Par ailleurs, le corps cylindrique peut avantageusement porter un organe de commande faisant saillie dans l'habitacle, à proximité de l'ouverture latérale du boîtier.

Grâce à cet organe de commande, un passager peut donc faire tourner manuellement le corps cylindrique afin de modifier la direction du flux d'air sortant de celui-ci.

De préférence, l'organe de commande est un disque solidaire de l'une des extrémités du corps cylindrique et s'étendant coaxialement avec ce dernier.

Il suffit par conséquent de faire tourner le disque à l'aide d'un doigt pour régler la direction du flux d'air sortant du corps cylindrique.

Afin d'augmenter la prise du doigt appliqué sur le disque, la périphérie de celui-ci peut être crantée.

Par ailleurs, l'organe de commande des ailettes logées dans le réceptacle et l'organe de commande du corps cylindrique sont de préférence situés de part et d'autre de l'ouverture d'aération du réceptacle et de l'ouverture latérale du boîtier.

Dans ce cas, les organes de commande sont accessibles très facilement en raison de leur présence à proximité de l'ouverture d'aération.

Pour limiter le poids de l'aérateur et permettre la fabrication de celui-ci en grande série dans des conditions économiques compétitives, le réceptacle, les ailettes situées dans celui-ci, le corps cylindrique et le boîtier peuvent être réalisés en matière plastique.

Un mode d'exécution de la présente invention sera décrit ci-après à titre d'exemple nullement limitatif en référence aux dessins annexés dans lesquels :
- la figure 1 est une vue de face schématique montrant un aérateur conforme à l'invention, cet aérateur étant installé derrière un cache fixé sur le tableau de bord d'un véhicule automobile ;
- la figure 2 est une vue en perspective schématique de l'aérateur ;
- la figure 3 est une vue en perspective éclatée de l'aérateur visible sur la figure 2 ;
- la figure 4 est une vue en coupe à échelle agrandie selon la ligne IV-IV de la figure 1;
- la figure 5 est une vue en coupe selon la ligne V-V de la figure 4 ;
- la figure 6 est une vue analogue à la figure 5, mais montrant les ailettes du réceptacle dans une autre position ; et
- les figures 7 à 9 sont des vues analogues à la figure 4 mais montrant le corps cylindrique dans des positions différentes.

L'aérateur représenté sur les dessins a été conçu pour être installé sur le tableau de bord d'une automobile.

Il va de soi cependant que l'on ne sortirait pas du cadre de la présente invention si cet aérateur était installé sur le panneau intérieur d'une portière ou sur tout autre support situé dans l'habitacle de l'automobile. Il pourrait également être utiliser pour diffuser de l'air dans l'habitacle d'un véhicule de transport tel qu'un avion ou un wagon.

L'aérateur visible sur les dessins est situé derrière un cache 1 fixé d'une manière connue en soi dans un évidement ménagé dans le tableau de bord 2.

Il comprend tout d'abord un réceptacle 3 comportant une première paroi transversale 4 pourvue d'un orifice 5 relié par l'intermédiaire d'un conduit 6 à une source d'air conditionné non représentée, une seconde paroi transversale 7 située en face de la paroi transversale 4, et une paroi périphérique 8 reliant les parois transversales 4 et 7.

La paroi périphérique 8 est cylindrique et comporte une ouverture d'aération 9 située en face d'un orifice ménagé dans le cache 1, les dimensions de cet orifice étant légèrement inférieures à celles de l'ouverture 9.

Le réceptacle 3 renferme plusieurs ailettes équidistantes 10a-10e uniformément réparties entre ses parois transversales 4 et 7.

Ces ailettes forment à l'intérieur du réceptacle 3 des saillies transversales augmentant par paliers égaux avec la distance les séparant de l'orifice 5 de la paroi transversale.

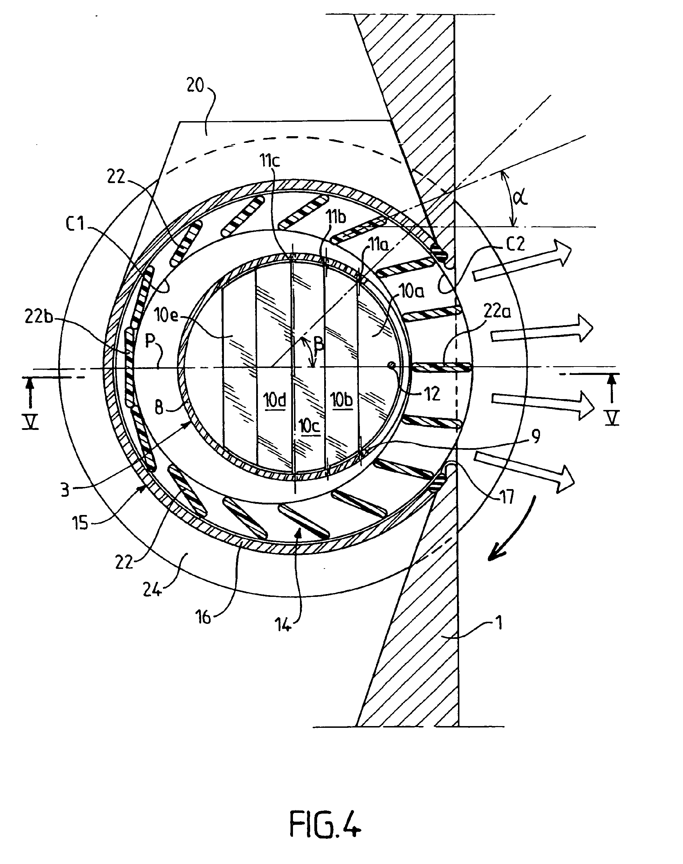

Comme le montre la figure 4, l'ailette 10a qui est la plus proche de l'orifice 5 est la moins saillante alors que l'ailette 10e qui est la plus éloignée de cet orifice est la plus saillante.

Les ailettes 10a à 10e sont destinées à modifier la direction d'introduction du flux d'air dans l'habitacle du véhicule.

A cet effet, elles sont montées pivotantes sur des axes 11a-11e s'étendant parallèlement aux parois transversales 4, 7 et prenant appui sur la paroi périphérique 8.

Elles sont reliées entre elles par une tige de liaison 12 s'étendant perpendiculairement à leurs axes de pivotement respectifs, la tige de liaison 12 étant elle-même reliée à un curseur 13 déplaçable dans une fente ménagée dans le cache 1, parallèlement à l'axe longitudinal du réceptacle 3.

Comme l'aérateur visible sur les dessins est fixé horizontalement sur la face arrière du tableau de bord 2, la direction du flux d'air admis dans l'habitacle du véhicule peut être choisie dans une plage limitée par deux directions extrêmes dirigées respectivement vers la droite et vers la gauche.

Il suffit pour cela de faire coulisser judicieusement le curseur 13 dans la fente du cache 1 pour que les ailettes 10a à 10e viennent dans une position de pivotement prédéterminée définissant la direction d'écoulement du flux d'air.

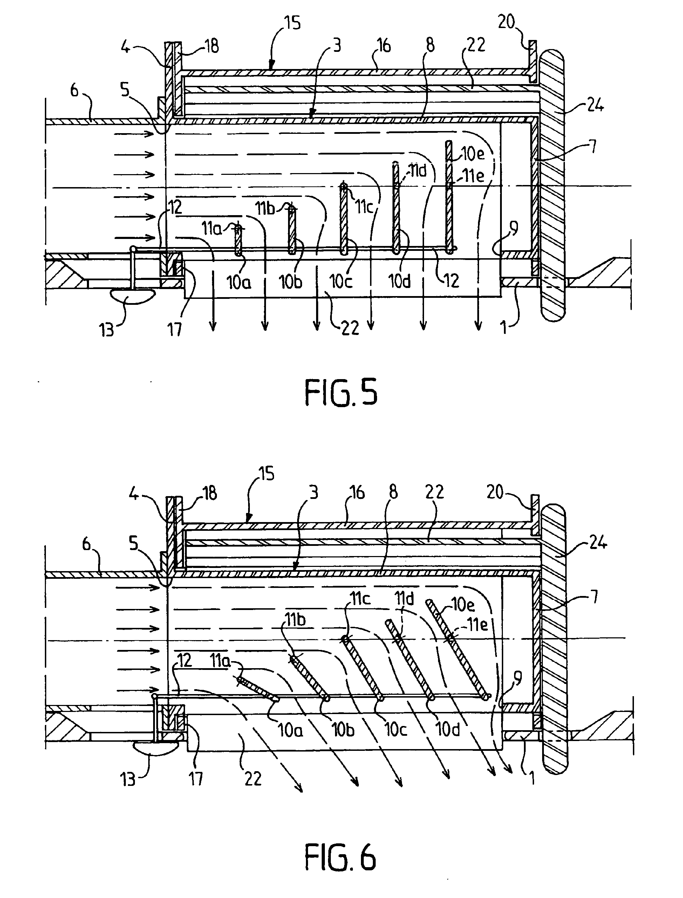

A titre d'illustration, la figure 5 montre que lorsque les ailettes sont perpendiculaires à l'axe longitudinal du réceptacle 3, elles dévient le flux d'air perpendiculairement à cet axe.

La figure 6 montre quant à elle que lorsque les ailettes sont inclinées vers la droite, elles dévient le flux d'air vers la droite.

Comme les ailettes 10a à 10e forment dans le réceptacle 3 des saillies d'autant plus grandes qu'elles sont plus éloignées de l'orifice 5, elles assurent une répartition uniforme de l'air sortant par l'ouverture d'aération 9.

On notera ici que ces ailettes ne s'étendent pas à l'extérieur de l'ouverture d'aération 9 et ne risquent donc pas d'être heurtées et détériorées par d'autres parties constitutives de l'aérateur.

On notera également que le curseur coulissant 13 pourrait être remplacé par une molette rotative.

Le réceptacle 3 et les ailettes 10a à 10e qui viennent d'être décrits sont situés à l'intérieur d'un corps cylindrique 14 monté rotatif dans un boîtier 15 situé directement derrière le cache 1 du tableau de bord.

Le boîtier 15 comporte une paroi cylindrique 16 pourvue d'une ouverture latérale 17 située en face de l'ouverture d'aération 9 du réceptacle 3. Il comprend également une première paroi transversale 18 appliquée contre la paroi transversale 4 du réceptacle et pourvue d'une ouverture 19 alignée avec l'orifice 5 de la paroi transversale 4 du réceptacle, ainsi qu'une seconde paroi transversale 20 pourvue d'une ouverture axiale 21 livrant passage au corps cylindrique 14.

Dans le mode de réalisation représenté, les parois transversales 18 et 20 sont parallèles et reçoivent entre elles la paroi cylindrique 16.

En ce qui concerne le corps cylindrique 14, il comporte une paroi latérale définie par des ailettes 22 s'étendant parallèlement à son axe longitudinal, ainsi que deux parois transversales, l'une étant pourvue d'un orifice 23 aligné avec l'orifice 5 de la paroi transversale 4 du réceptacle et l'autre étant constituée par un disque 24 dont le diamètre est supérieur à celui du corps 14.

En se référant en particulier à la figure 4, on remarquera que les ailettes 22 sont disposées symétriquement par rapport à un plan diamétral P prédéterminé du corps 14 et présentant par rapport à ce plan des inclinaisons variant progressivement.

On remarquera également la présence de deux ailettes extrêmes 22a, 22b dont les plans médians longitudinaux forment des angles de respectivement 0° et 90° avec le plan diamétral P.

Dans le mode de réalisation représenté, les côtés longitudinaux des ailettes 22 délimitent un cercle interne C1 et un cercle externe C2 pratiquement tangents au niveau de l'ailette extrême 12b.

Par ailleurs, les plans médians longitudinaux des ailettes 22 situées de part et d'autre du plan diamétral P forment avec ce dernier des angles α différents, la valeur d'un angle α pour une ailette prédéterminée étant égale à la moitié de celle de l'angle β formé, pour cette ailette prédéterminée, par deux rayons prédéterminés du cercle C2, à savoir le rayon situé dans le plan médian longitudinal de l'ailette extrême 22a et le rayon coupant l'axe longitudinal de ladite ailette prédéterminée.

En se référant plus particulièrement à la figure 4, on remarquera que la paroi périphérique 8 du réceptacle 3 est tangente au cercle interne C1, du côté de l'ouverture latérale 17 du boîtier 15.

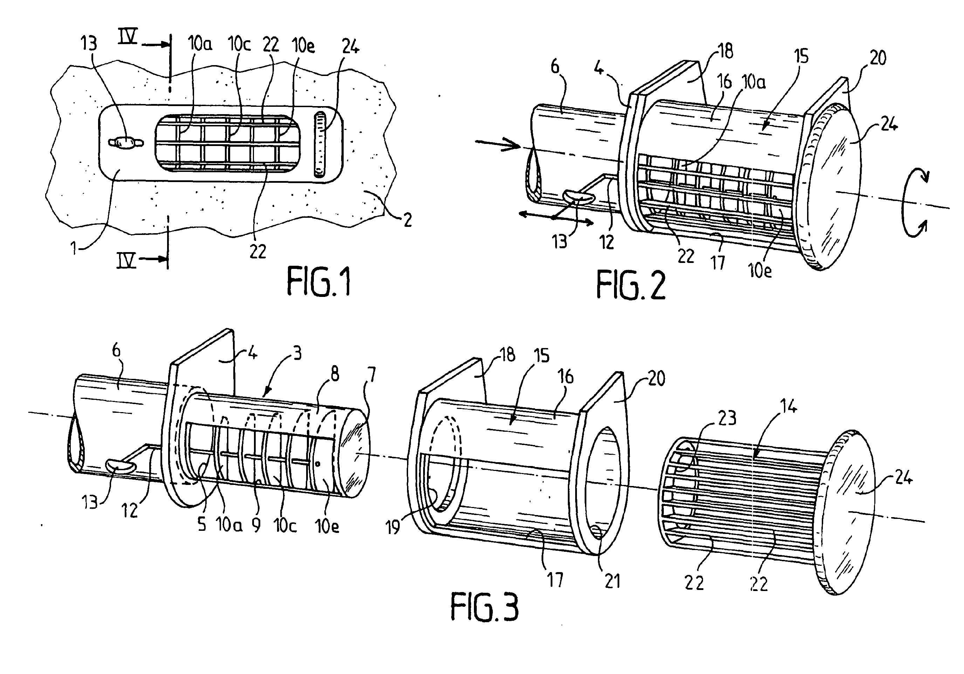

Comme le montre par ailleurs clairement la figure 1, le disque 24 constituant l'une des deux parois transversales du corps 14 fait saillie dans une lumière ménagée dans le cache 1, à proximité de l'orifice de celui-ci qui est situé devant l'ouverture latérale 17 de la paroi cylindrique du boîtier 15.

La périphérie du disque 24 est crantée afin qu'un passager du véhicule puisse facilement faire tourner le corps cylindrique 14 à l'aide d'un doigt.

Comme le montre également la figure 1, le curseur 13 et le disque 24 sont situés de part et d'autre de la lumière ménagée dans le cache 1.

Alors que le curseur 13 est déplaçable dans une fente ménagée dans le cache 1, parallèlement à l'axe longitudinal du réceptacle 3, le disque 24 fait saillie dans une lumière du cache 1 qui est perpendiculaire à la fente recevant le curseur.

Pour être complet, on précisera que le réceptacle 3, les ailettes 10 à 10e situées dans celui-ci, le corps cylindrique 14 et le boîtier 15 sont réalisés en matière plastique et que des joints d'étanchéité sont prévues pour éviter des fuites d'air entre les différentes parties constitutives de l'aérateur.

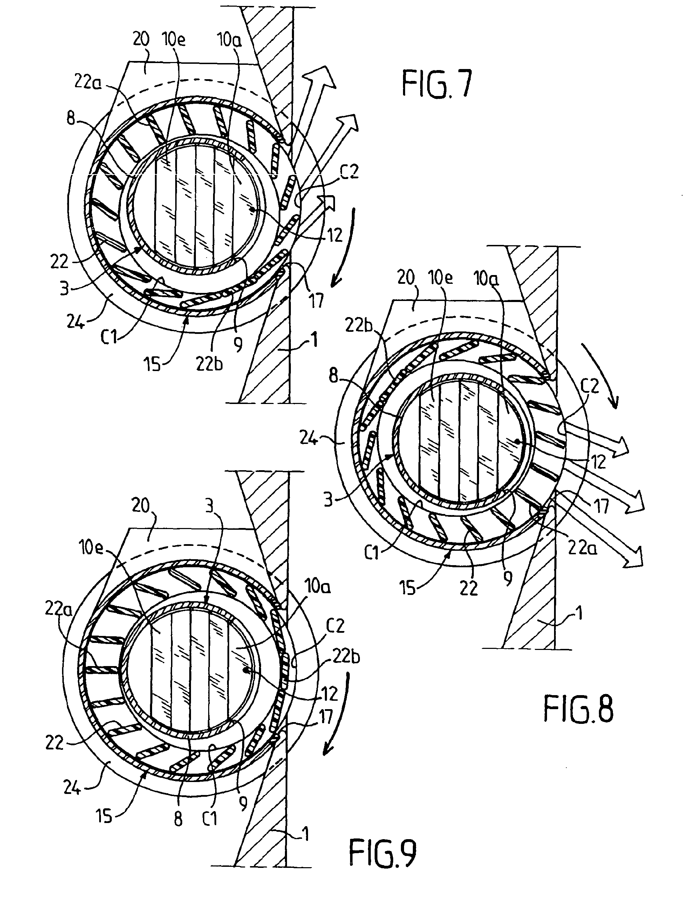

Comme l'aérateur est installé horizontalement sur le tableau de bord 2, le corps cylindrique 14 permet de diriger le flux d'air entrant dans l'habitacle du véhicule dans de très nombreuses directions dirigées vers le haut, comme représenté sur la figure 7 et de très nombreuses directions dirigées vers le bas, comme représenté sur la figure 8.

En faisant tourner d'un angle prédéterminé, dans un sens ou dans l'autre, le corps cylindrique 14 dans le boîtier 15, un passager peut donc diriger le flux d'air vers le haut ou vers le bas dans une direction particulière précise.

Quand ce passager fait tourner le corps cylindrique 14 de façon à amener l'ailette extrême 22a dans la partie centrale de l'ouverture latérale 17 du boîtier 15, comme représenté sur la figure 4, le flux d'air pénètre pratiquement horizontalement dans l'habitacle avec un débit important.

En revanche, quand il fait tourner le corps cylindrique 14 de façon à amener l'ailette extrême 22b et les ailettes adjacentes à celle-ci dans la partie centrale de l'ouverture latérale 17 du boîtier 15, comme représenté sur la figure 9, le flux d'air ne peut pénétrer dans l'habitacle, l'ailette 22b et les ailettes adjacentes obturant complètement l'ouverture 17.

Le passager installé à proximité de l'aérateur qui vient d'être décrit peut bien entendu diriger le flux d'air dans une direction particulière précise vers la droite ou vers la gauche et vers le haut et vers le bas en agissant judicieusement à la fois sur le curseur 13 et sur le disque 24.

On précisera enfin que les déplacements du curseur 13 et du disque 24 pourraient éventuellement être commandés par des organes motorisés.

## Revendications

1. Aérateur destiné à introduire un flux d'air dans l'habitacle d'un véhicule, notamment d'une automobile, comprenant un réceptacle cylindrique (3) comportant un orifice (5) situé au niveau de l'une de ses extrémités et relié à une source d'air conditionné, une paroi transversale (7) fermant son autre extrémité et une paroi périphérique (8) pourvue d'une ouverture d'aération (9) débouchant dans l'habitacle du véhicule, et des ailettes de réglage (10a-10e) destinées à modifier la direction du flux d'air sortant de l'ouverture d'aération, ces ailettes étant uniformément réparties dans le réceptacle (3) dans lequel elles sont montées pivotantes sur des axes s'étendant parallèlement à la paroi transversale (7) dudit réceptacle, **caractérisé en ce que** les ailettes (10a-10e) ont des dimensions qui augmentent avec la distance les séparant de l'orifice (5) du réceptacle (3) et obturent ainsi progressivement ce dernier dans le sens allant de son orifice (5) à sa paroi transversale (7).

2. Aérateur selon la revendication 1, **caractérisé en ce que** les ailettes (10a-10e) comportent un bord extérieur de niveau avec l'ouverture d'aération (9) de la paroi périphérique (8) du réceptacle (3).

3. Aérateur selon la revendication 1 ou 2, **caractérisé en ce que** les ailettes (10a-10e) sont reliées entre elles par une tige de liaison (12) s'étendant perpendiculairement à leurs axes de pivotement (11a-11e) respectifs, la tige de liaison étant elle-même reliée à un organe de commande manuel (13) faisant saillie dans l'habitacle, à proximité de l'ouverture d'aération (9).

4. Aérateur selon la revendication 3, **caractérisé en ce que** l'organe de commande manuel est un curseur coulissant (13).

5. Aérateur selon l'une quelconque des revendications précédentes, **caractérisé en ce que** le réceptacle (3) est situé à l'intérieur d'un corps cylindrique (14) dont la paroi latérale est définie par des ailettes (22) s'étendant parallèlement à son axe longitudinal, le corps cylindrique étant monté rotatif axialement dans un boîtier (15) comportant une ouverture latérale (17) faisant face à l'ouverture d'aération (9) du réceptacle (3).

6. Aérateur selon la revendication 5, **caractérisé en ce que** les ailettes (22) du corps cylindrique (14) sont disposées symétriquement par rapport à un plan diamétral prédéterminé (P) de ce dernier et présentent par rapport à ce plan des inclinaisons variant progressivement.

7. Aérateur selon la revendication 6, **caractérisé en ce que** le corps cylindrique (14) comporte deux ailettes extrêmes (22a,22b) dont les plans médians longitudinaux forment des angles de respectivement 0° et 90° avec le plan diamétral prédéterminé (P).

8. Aérateur selon la revendication 7, **caractérisé en ce que** les côtés longitudinaux des ailettes (22) délimitent des cercles interne (C1) et externe (C2) pratiquement tangents au niveau de l'ailette extrême (22b) dont le plan médian longitudinal forme un angle de 90° avec le plan diamétral prédéterminé (P).

9. Aérateur selon la revendication 8, **caractérisé en ce que** la paroi périphérique (8) du réceptacle (3) est tangente au cercle (C1) délimité par les côtés longitudinaux internes des ailettes (22) du corps cylindrique (14), au niveau de sa partie qui est située dans le plan diamétral prédéterminé (P), du côté de l'ouverture latérale (17) du boîtier (15).

10. Aérateur selon la revendication 8 ou 9, **caractérisé en ce que** les plans médians longitudinaux des ailettes (22) situées de part et d'autre du plan diamétral prédéterminé (P) forment avec ce dernier des angles (α) différents, la valeur d'un angle (α) pour une ailette prédéterminée (22) étant égale à la moitié de celle de l'angle (β) formé, pour cette aile prédéterminée, par deux rayons prédéterminés du cercle externe, à savoir le rayon situé dans le plan médian longitudinal de l'ailette extrême (22a) qui forme un angle nul avec le plan diamétral prédéterminé (P) et le rayon coupant l'axe longitudinal de l'ailette (22) correspondante.

11. Aérateur selon l'une quelconque des revendications 5 à 10, **caractérisé en ce que** le corps cylindrique (14) porte un organe de commande (24) faisant saillie dans l'habitacle, à proximité de l'ouverture latérale (17) du boîtier (15).

12. Aérateur selon la revendication 11, **caractérisé en ce que** l'organe de commande est un disque (24) solidaire de l'une des extrémité du corps cylindrique (15) et s'étendant coaxialement avec ce dernier.

13. Aérateur selon la revendication 12, **caractérisé en ce que** la périphérie du disque (24) est crantée.

14. Aérateur selon l'une des revendications 3 et 4 et l'une des revendications 11 à 13, **caractérisé en ce que** l'organe de commande (13) des ailettes logées dans le réceptacle (3) et l'organe de commande (24) du corps cylindrique (14) sont situés de part et d'autre de l'ouverture d'aération (9) du réceptacle (3) et de l'ouverture latérale (17) du boîtier (15).

15. Aérateur selon l'une quelconque des revendications précédentes, **caractérisé en ce que** le réceptacle (3), les ailettes (10a-10e) situées dans celui-ci, le corps cylindrique (14) et le boîtier (15) sont réalisés en matière plastique.

## Claims

1. A ventilator for introducing a flow of air into the passenger compartment of a vehicle, especially an automotive vehicle, comprising a cylindrical housing (3) with a hole (5) located at one end thereof and connected to a conditioned air source, a transverse wall (7) closing the other end thereof and a peripheral wall (8) provided with a ventilation aperture (9) opening into the passenger compartment of the vehicle, and adjusting blades (10a-10e) for changing the direction of the air flowing out of the ventilation aperture, said blades being uniformly distributed in the housing (3), in which they are pivotally mounted on pins extending parallel to the transverse wall (7) of said housing, **characterized in that** the blades (10a-10e) have dimensions increasing with their distance from the hole (5) of the housing (3) and thus gradually close the latter in the direction from the hole (5) to the transverse wall (7) thereof.

2. The ventilator according to claim 1, **characterized in that** the blades (10a-10e) have an outer edge flush with the ventilation aperture (9) of the peripheral wall (8) of housing (3).

3. The ventilator according to claim 1 or 2, **characterized in that** the blades (10a-10e) are interconnected by a connecting rod (12), which extends perpendicular to their respective pivot pins (11a-11e), the connecting rod being itself connected to a manual control member (13) projecting into the passenger compartment, adjacent to the ventilation aperture (9).

4. The ventilator according to claim 3, **characterized in that** the manual control member is a sliding cursor (13).

5. The ventilator according to any of the preceding claims, **characterized in that** the housing (3) is disposed inside a cylindrical body (14) having its side wall formed by blades (22), which extend parallel to the longitudinal axis thereof, the cylindrical body being rotatably mounted axially in a casing (15) comprising a side aperture (17) facing the ventilation aperture (9) of the housing (3).

6. The ventilator according to claim 5, **characterized in that** the blades (22) of the cylindrical body are arranged symmetrically with respect to a predetermined diametrical plane (P) of the latter and exhibit gradually varying slants relatively to this plane.

7. The ventilator according to claim 6, **characterized in that** the cylindrical body (14) comprises two extreme blades (22a, 22b) with longitudinal median planes forming angles of 0° and 90°, respectively, with the predetermined diametrical plane (P).

8. The ventilator according to claim 7, **characterized in that** the longitudinal sides of the blades (22) define inner (C1) and outer (C2) circles, which are practically tangent at the extreme blade (22b) whose longitudinal median plane forms an angle of 90° with the predetermined diametrical plane (P).

9. The ventilator according to claim 8, **characterized in that** the peripheral wall (8) of the housing (3) is tangent to the circle (C1) defined by the inner longitudinal sides of the blades (22) of the cylindrical body (14), at the portion thereof located in the predetermined diametrical plane (P), on the side of the lateral aperture (17) of the casing (15).

10. The ventilator according to claim 8 or 9, **characterized in that** the longitudinal median planes of the blades (22), which are positioned on each side of the predetermined diametrical plane (P) form with the latter different angles (α), the value of one angle (α) for one predetermined blade (22) being equal to half that of the angle (β) formed, for this predetermined blade, by two predetermined radii of the outer circle, namely the radius located in the longitudinal median plane of the extreme blade (22a), that forms a zero angle with the predetermined diametrical plane (P), and the radius intersecting the longitudinal axis of the corresponding blade (22).

11. The ventilator according to any of claims 5 to 10, **characterized in that** the cylindrical body (14) carries a control member (24) projecting into the housing, adjacent to the side aperture (17) of casing (15).

12. The ventilator according to claim 11, **characterized in that** the control member is a disc (24) integral with one end of the cylindrical body (15) and extending coaxially therewith.

13. The ventilator according to claim 12, **characterized in that** the periphery of the disc (24) is serrated.

14. The ventilator according to one of claims 3 and 4 and one of claims 11 to 13, **characterized in that** the control member (13) of the blades disposed in the housing (3) and the control member (24) of the cylindrical body (14) are located on each side of the ventilation aperture (9) of the housing (3) and the side aperture (17) of the casing (15).

15. The ventilator according to any of the preceding claims, **characterized in that** the housing (3), the blades (10a-10e) positioned therein, the cylindrical body (14) and the casing (15) are made from plastic material.

## Patentansprüche

1. Lüfter zum Einleiten eines Luftstroms in die Fahrgastzelle eines Fahrzeugs, im Besonderen eines Kraftfahrzeugs, umfassend einen zylindrischen Behälter (3), der eine Öffnung (5), die auf Höhe eines seiner Enden angeordnet ist und mit einer Quelle aufbereiteter Luft verbunden ist, eine Querwand (7), die sein anderes Ende verschließt, und eine Umfangswand (8), die mit einer in die Fahrgastzelle des Fahrzeugs mündenden Belüftungsöffnung (9) versehen ist, und Regelflügel (10a - 10e) zum Verändern der Richtung des aus der Belüftungsöffnung austretenden Luftstromes umfasst, wobei diese Flügel in dem Behälter (3), in dem sie schwenkbar an Achsen montiert sind, die sich parallel zu der Querwand (7) des Behälters erstrecken, gleichmäßig verteilt sind, **dadurch gekennzeichnet, dass** die Flügel (10a - 10e) Maße aufweisen, die sich mit dem Abstand, der sie von der Öffnung (5) des Behälters (3) trennt, vergrö-ßern, und somit den Behälter in der Richtung von seiner Öffnung (5) bis zu seiner Querwand (7) zunehmend verschließen.

2. Lüfter nach Anspruch 1, **dadurch gekennzeichnet, dass** die Flügel (10a - 10e) eine Außenkante auf gleicher Höhe mit der Belüftungsöffnung (9) der Umfangswand (8) des Behälters (3) umfassen.

3. Lüfter nach Anspruch 1 oder 2, **dadurch gekennzeichnet, dass** die Flügel (10a - 10e) durch einen Verbindungsstab (12) miteinander verbunden sind, der sich senkrecht zu ihren jeweiligen Schwenkachsen (11a - 11e) erstreckt, wobei der Verbindungsstab selbst mit einer in die Fahrgastzelle vorstehenden manuellen Steuervorrichtung (13) in der Nähe der Belüftungsöffnung (9) verbunden ist.

4. Lüfter nach Anspruch 3, **dadurch gekennzeichnet, dass** die manuelle Steuervorrichtung ein Gleitschieber (13) ist.

5. Lüfter nach einem der vorhergehenden Ansprüche, **dadurch gekennzeichnet, dass** der Behälter (3) im Inneren eines zylindrischen Körpers (14) angeordnet ist, dessen Seitenwand durch Flügel (22), die sich parallel zu seiner Längsachse erstrecken, gebildet wird, wobei der zylindrische Körper axial drehbar in einem Gehäuse (15) angebracht ist, das eine der Belüftungsöffnung (9) des Behälters (3) gegenüberliegende seitliche Öffnung (17) umfasst.

6. Lüfter nach Anspruch 5, **dadurch gekennzeichnet, dass** die Flügel (22) des zylindrischen Körpers (14) in Bezug auf eine vorgegebene diametrale Ebene (P) des zylindrischen Körpers symmetrisch angeordnet sind und sich schrittweise ändernde Neigungen in Bezug auf diese Ebene darstellen.

7. Lüfter nach Anspruch 6, **dadurch gekennzeichnet, dass** der zylindrische Körper (14) zwei äußerste Flügel (22a, 22b) umfasst, deren mittlere Längsebenen Winkel von 0° bzw. 90° mit der vorgegebenen diametralen Ebene (P) bilden.

8. Lüfter nach Anspruch 7, **dadurch gekennzeichnet, dass** die Längsseiten der Flügel (22) den Innenkreis (C1) und den Außenkreis (C2) praktisch tangierend auf Höhe des äußersten Flügels (22b) begrenzen, dessen mittlere Längsebene einen Winkel von 90° mit der vorgegebenen diametralen Ebene (P) bildet.

9. Lüfter nach Anspruch 8, **dadurch gekennzeichnet, dass** die Umfangswand (8) des Behälters (3) auf der Seite der seitlichen Öffnung (17) des Gehäuses (15) Tangente des Kreises (C1) ist, der auf Höhe seines in der vorgegebenen diametralen Ebene (P) befindlichen Teils durch die inneren Längsseiten der Flügel (22) des zylindrischen Körpers (14) begrenzt wird.

10. Lüfter nach Anspruch 8 oder 9, **dadurch gekennzeichnet, dass** die mittleren Längsebenen der Flügel (22), die zu beiden Seiten der vorgegebenen diametralen Ebene (P) angeordnet sind, mit dieser unterschiedliche Winkel (α) bilden, wobei der Wert eines Winkels (α) für einen vorgegebenen Flügel (22) der Hälfte des Wertes des Winkels (β) entspricht, der für diesen vorgegebenen Flügel durch zwei vorgegebene Radien des Außenkreises gebildet wird, nämlich durch den Radius, der in der mittleren Längsebene des äußersten Flügels (22a) angeordnet ist, die mit der vorgegebenen diametralen Ebene (P) einen Vollwinkel bildet, und den Radius, der die Längsachse des entsprechenden Flügels (22) schneidet.

11. Lüfter nach einem der Ansprüche 5 bis 10, **dadurch gekennzeichnet, dass** der zylindrische Körper (14) eine in die Fahrgastzelle vorstehende Steuervorrichtung (24) in der Nähe der seitlichen Öffnung (17) des Gehäuses (15) trägt.

12. Lüfter nach Anspruch 11, **dadurch gekennzeichnet, dass** die Steuervorrichtung eine Scheibe (24) ist, die mit einem der Enden des zylindrischen Körpers (15) fest verbunden ist und sich koaxial zu dem zylindrischen Körper erstreckt.

13. Lüfter nach Anspruch 12, **dadurch gekennzeichnet, dass** der Umfang der Scheibe (24) gerändelt ist.

14. Lüfter nach einem der Ansprüche 3 und 4 sowie einem der Ansprüche 11 bis 13, **dadurch gekennzeichnet, dass** die Steuervorrichtung (13) der in dem Behälter (3) untergebrachten Flügel und die Steuervorrichtung (24) des zylindrischen Körpers (14) zu beiden Seiten der Belüftungsöffnung (9) des Behälters (3) und der seitlichen Öffnung (17) des Gehäuses (15) angeordnet sind.

15. Lüfter nach einem der vorhergehenden Ansprüche, **dadurch gekennzeichnet, dass** der Behälter (3), die in ihm angeordneten Flügel (10a - 10e), der zylindrische Körper (14) und das Gehäuse (15) aus Kunststoffmaterial hergestellt sind.
